# EUROPÄISCHE PATENTANMELDUNG

(11) **EP 4 553 377 A1**
(43) Veröffentlichungstag der Anmeldung: **14.05.2025**
(21) Anmeldenummer: 24210040.2
(22) Anmeldetag: 31.10.2024
(51) Int. Cl.: F21V 5/04, F21V 7/04, F21V 13/02, G02B 19/00, F21V 5/00

(54) **STRAHLER**

(30) Priorität: 08.11.2023 DE 102023130876
(71) Anmelder: Bartenbach Holding GmbH, 6071 Aldrans (AT)
(72) Erfinder: FRISCHMANN, Florian, 6460 Imst (AT); FÖGER, Daniel, 6424 Silz (AT)
(74) Vertreter: Thoma, Michael

(57) **Zusammenfassung**

Die vorliegende Erfindung umfasst einen Strahler (1) mit einer Lichtquelle (3) sowie einer Linse (2) zum Formen eines Strahlenbündels, wobei die Linse aufeinander abgestimmte Direktlicht-Eintritts (4) - und Austrittsflächen (7) zum Einfangen von Licht aus der Lichtquelle (3) und Abstrahlen eines unreflektierten Direktlichtbündels aufweist, wobei die genannten Direktlicht-Eintritts- und Austrittsflächen (4, 7) jeweils derart konvex konturiert sind, dass die von der Direktlicht-Eintrittsfläche (4) auf die Direktlicht-Austrittsfläche (7) geworfenen Lichtstrahlen sich im Inneren der Linse (2) überkreuzen und von der Direktlicht-Austrittsfläche (7) wieder gebündelt als Direktlicht-Strahlenbündel abgegeben werden. Die Direktlicht-Eintritts- und Austrittsflächen (4, 7) arbeiten zusammen abbildungsbrechend, so dass die Lichtquelle (3) im abgestrahlten Lichtstrahlenbündel nicht abgebildet wird.

## Beschreibung

Die vorliegende Erfindung betrifft einen Strahler mit einer Lichtquelle sowie einer Linse zum Formen eines Strahlenbündels, wobei die Linse aufeinander abgestimmte Direktlicht-Eintritts- und -Austrittsflächen zum Einfangen von Licht aus der Lichtquelle und Abstrahlen eines unreflektierten Direktlichtbündels aufweist.

Strahler werfen ein gebündeltes Licht in eine Richtung, wobei das Lichtstrahlenbündel keine oder nur eine geringfügige Aufweitung zeigt und regelmäßig im Unendlichen fokussiert, wobei es beim sogenannten Loch- bzw. Panelstrahler auch eine recht nahe an der Optik liegende Einschnürung geben kann, so dass der Strahler durch ein enges Loch beispielsweise in einem Deckenpanel hindurch strahlen kann, welches kleiner ist als der Durchmesser der Optik, und sich das Strahlenbündel auf der vom Strahler abgewandten Panelseite wieder etwas aufweiten kann.

Um ein solches gerichtetes Lichtstrahlenbündel mit einem engen Strahlungswinkel zu erzeugen, werden häufig Kollimatorlinsen verwendet, die zumeist als TIR-Optik ausgeführt sind, d.h. mit totaler interner Reflektion arbeiten, um das Lichtstrahlenbündel bzw. einen Teil hiervon zu formen. Solche Kollimatorlinsen ermöglichen einen engen Strahlungswinkel bei einer hohen lichttechnischen Effizienz von regelmäßig über 80%.

Das von solchen Kollimatorlinsen geformte Lichtstrahlenbündel umfasst dabei regelmäßig zwei unterschiedliche Strahlentypen, nämlich einerseits das nicht reflektierte Direktlichtstrahlenbündel und zum anderen das reflektierte Indirektlichtstrahlenbündel. Das nicht reflektierte Direktlichtstrahlenbündel geht üblicherweise ohne größere Umlenkungen durch den zentralen Teil der Linse und wird an sich nur an der Lichteintrittsfläche und der Lichtaustrittsfläche abgelenkt, wobei die für den Direktlichtteil verantwortlichen Lichteintritts- und Lichtaustrittsflächen so aufeinander abgestimmt sind, dass das Direktlichtstrahlenbündel mit engem Aufweitwinkel die Linse verlässt.

Das Indirektlichtstrahlenbündel wird üblicherweise von einem äußeren Ringabschnitt der Linse geformt, wobei zu den Ablenkungen der Strahlengänge an den Lichteintritts- und Lichtaustrittsflächen eine Reflektion an der Umfangsfläche der Linse hinzukommt, d.h. die Lichtstrahlen werden von der Lichteintrittsfläche üblicherweise auf die Umfangsfläche der Linse geworfen, dort reflektiert und schließlich beim Austritt durch die Lichtaustrittsfläche nochmals abgelenkt. Der Reflexion an der Umfangsfläche kann dabei ggf. auch durch eine reflektierende Beschichtung der Umfangsfläche nachgeholfen werden. Die für das reflektierte Indirektlicht zuständigen Lichteintritts-, Umfangs- und Lichtaustrittsflächen sind dabei so aufeinander abgestimmt, dass auch das Indirektlichtbündel mit nur einem engen oder gar keinem Aufweitwinkel von der Lichtaustrittsfläche abgestrahlt wird. Im Zielgebiet können sich die Direktlicht- und Indirektlicht-Strahlenbündel überlagern.

Um auf diesem Weg eine enge Bündelung des abgestrahlten Lichts zu erzeugen, wird eine glatte, hochtransparente Oberfläche zumindest an der Lichtaustrittsseite benötigt und sinnvollerweise auch auf der Eintrittsseite vorgesehen, um Streulichteffekte und unerwünscht große Aufweitwinkel zu vermeiden. Facetten sind insofern nur in schwacher Ausprägung möglich.

Ein sich dabei ergebendes Problem besteht in unerwünschten Abbildungseffekten insbesondere im Bereich des nicht reflektierten Direktlichts. Durch das Direktlicht im Zentrum der Linse kommt es zu Abbildungseffekten, insbesondere dahingehend, dass rechteckige Lichtquellen wie beispielsweise LEDs bzw. LED-Cluster im Zielgebiet eine unerwünschte, ebenfalls rechteckige Konturierung der Lichtverteilung erzeugen, d.h. dort abgebildet werden. Dies wird zwar in gewissem Maße durch die Überlagerung des mehr oder minder runden Indirektlichtanteils ausgeglichen. Nichtsdestotrotz bleibt aber die rechteckige Deformation des Strahlenbündels sichtbar.

Wird eine mehrfarbige Lichtquellengruppe beispielsweise in Form eines mehrfarbigen LED-Clusters als Lichtquelle verwendet, kommt es zudem durch die abbildende Wirkung solcher Kollimatorlinsen auch zu exzentrischen Verschiebungen der Farbtemperaturen im Zielgebiet, da beispielsweise ein im LED-Cluster links oben positionierter roter Baustein im Zielgebiet das Rot nach rechts unten verschiebt.

Strahlerlinsen der genannten Art sind aus der Praxis beispielsweise untern den Firmen- bzw. Produktnamen "LED Veronica", "Cardo Narrow" und Gaggione LLC 05 N" bekannt.

Der vorliegenden Erfindung liegt hiervon ausgehend die Aufgabe zugrunde, einen verbesserten Strahler der genannten Art zu schaffen, der Nachteile des Stands der Technik vermeidet und letzteren in vorteilhafter Weise weiterbildet. Insbesondere soll ein Strahler ohne ungewünschte Abbildungseffekte mit einer im Zielgebiet gleichmäßig runden Konturierung der Lichtstärken und gleichmäßig rotationssymmetrischer Lichtfarbenverteilung geschaffen werden, ohne die hohe lichttechnische Effizienz bekannter Kollimatorlinsen zu opfern.

Die genannte Aufgabe wird erfindungsgemäß durch einen Strahler gemäß Anspruch 1 gelöst. Bevorzugte Ausgestaltungen der Erfindung sind Gegenstand der abhängigen Ansprüche.

Es wird also vorgeschlagen, die für das nicht reflektierte Direktlichtstrahlenbündel verantwortlichen Lichteintritts- und Lichtaustrittsflächen stark plastisch zu modellieren, um innerhalb der Linse zwischen den Lichteintritts- und Lichtaustrittsflächen eine Überkreuzung der Lichtstrahlen zu erzielen. Auch wenn die Strahlengänge des Direktlichtanteils keine Reflektion erfahren, überkreuzen sich die Strahlengänge im Inneren der Linse und werden von den jeweils stark konvex konturierten Eintritts- und Austrittsflächen der Linse so stark umgelenkt, dass es insgesamt zu einem Zerstören bzw. zumindest zu einem Abschwächen des Abbildungseffekts kommt.

Erfindungsgemäß sind die genannten Direktlicht-Eintritts- und -austrittsflächen jeweils derart konvex konturiert, dass die von der Direktlichteintrittsfläche auf die Direktlichtaustrittsfläche geworfenen Lichtstrahlen sich im Inneren der Linse überkreuzen und von der Direktlichtaustrittsfläche wieder gebündelt als Direktlichtstrahlenbündel abgegeben werden.

Die genannten Direktlicht-Eintrittsflächen und -Austrittsflächen können insbesondere mehr oder minder spitze, einerseits zur Lichtquelle hin und andererseits zur Abstrahlrichtung hin vorspringende Zapfen bilden bzw. insgesamt kegelförmig bzw. zuckerhutförmig vorspringend ausgebildet sein, um in der Linse überkreuzende Strahlengänge und von der Lichtaustrittsfläche abgehend ein enges Direktlichtstrahlenbündel mit einem nur kleinen oder gar keinem Aufweitwinkel zu erzeugen. Durch eine kegelige bzw. tannenzapfenförmige oder zuckerhutförmige Direktlicht-Eintrittsfläche werden die in die Linse eintretenden Lichtstrahlen stärker umgelenkt und können diagonal zur zentralen Linsenachse, die sich durch die Linse laufen, bis sie die ebenfalls tannenzapfen- bzw. zuckerhutförmige oder kegelige Lichtaustrittsfläche erreichen und von dort sozusagen wieder zurück abgelenkt werden, um ein zumindest näherungsweise parallel gerichtetes Lichtstrahlenbündel zu erzeugen.

Insbesondere sind die genannten Direktlicht-Eintritts- und -austrittsflächen jeweils derart konvex konturiert, dass das genannte Überkreuzen der Lichtstrahlen zwischen den genannten Direktlicht-Eintritts- und Austrittsflächen für alle Lichtstrahlen gilt, die von einem gemeinsamen Punkt ausgehen und von diesem Punkt ausgehend auf die Direktlicht-Eintrittsfläch fallen. Die genannten Direktlicht-Eintritts- und -austrittsflächen sind derart also derart konturiert und aufeinander abgestimmt, dass die Direktlichteintrittsfläche die bzw. alle Lichtstrahlen, die von einem gemeinsamen Punkt ausgehend auf sie fallen, auf die Direktlichtaustrittsfläche wirft und zwar so, dass die Lichtstrahlen vor Auftreffen auf die Direktlicht-Austrittsfläche einander kreuzen, und dann von der Direktlichtaustrittsfläche wieder gebündelt als Direktlichtstrahlenbündel abgegeben werden.

Vorzugsweise ist dabei die Direktlicht-Eintrittsfläche derart konturiert, dass die von einem Punkt her kommenden, auf sie treffenden Lichtstrahlen so umgelenkt werden, dass die Lichtstrahlen im Inneren der Linse über die Zentralachse bzw. Symmetrieachse oder Hauptabstrahlachse der Linse hinweg gehen bzw. diese zentrale Längsachse der Linse kreuzen, bevor die Lichtstrahlen auf die Direktlicht-Austrittsfläche fallen.

Die Direktlicht-Eintrittsfläche kann insbesondere nach dem Prinzip "von innen nach aussen" und "von aussen nach innen" strahlen. Die Direktlicht-Eintritts- und Austrittsflächen können jeweils einen inneren, im Zentrum und/oder zum Zentrum benachbart angeordneten Flächenteil sowie einen äußeren, vom Zentrum beabstandeten Flächenteil aufweisen, wobei die Direktlicht-Eintrittsfläche dazu ausgebildet sein kann, mit ihrem genannten inneren Flächenteil den äußeren Flächenteil der Direktlicht-Austrittsfläche zu bestrahlen und mit ihrem genannten äußeren Flächenteil den inneren Flächenteil der Direktlicht-Austrittsfläche zu bestrahlen.

Vorzugsweise arbeiten die Direktlicht-Eintritts- und Austrittsflächen zusammen abbildungsbrechend, so dass das von der Direktlicht-Austrittsfläche abgestrahlte Direktlichstrahlenbündel kein Abbild des an der Direktlicht-Eintrittsfläche auftreffenden Lichtstrahlenbündels und/oder des von der Lichtquelle abgestrahlten Lichtstrahlenbündel bildet. Durch das abbildungsbrechende Zusammenwirken der Direktlicht-Eintritts- und Austrittsflächen kann bspw. bei rechteckiger Konturierung der Lichtquelle, bspw. in Form eines LED-Cluster-Chips, ein insgesamt rund konturiertes Lichtbündel von der Linse als Direktlichtbündel abgestrahlt werden. Die Lichtquelle wird im von der Linse abgestrahlten Lichtstrahlenbündel und insbesondere auch im Direktlicht-Strahlenbündel selbst nicht abgebildet.

In Weiterbildung der Erfindung kann die Direktlicht-Eintrittsfläche eine Sprung- oder Unstetigkeitsstelle besitzen, die vorzugsweise im Zentrum der Direktlicht-Eintrittsfläche angeordnet sein kann. Alternativ oder zusätzlich kann auch die Direktlicht-Austrittsfläche eine Sprung- oder Unstetigkeitsstelle besitzt, die vorzugsweise im Zentrum der Direktlicht-Eintrittsfläche angeordnet ist, wobei an der genannten Sprung- oder Unstetigkeitsstelle der Direktlicht-Eintritts- und Austrittsflächen eine ansonsten vorzugsweise insgesamt harmonische Krümmung der Direktlicht-Eintritts- und Austrittsflächen unterbrochen sein kann.

Die Direktlicht-Eintrittsfläche und -Austrittsfläche können dabei hinsichtlich ihrer Konturierung und Anordnung derart aufeinander abgestimmt sein, dass das Direktlichtstrahlenbündel im Wesentlichen keine Aufweitung erfährt, beispielsweise einen Fokuspunkt im Unendlichen besitzt. Je nach konkreter Beleuchtungsaufgabe kann das Direktlichtstrahlenbündel aber durchaus auch eine kleine Aufweitung zeigen, beispielsweise einen Aufweitwinkel von 2 x 5° oder kleiner. Alternativ oder zusätzlich kann das Direktlichtstrahlenbündel auch eine Einschnürung relativ nahe an der Linse aufweisen, um beispielsweise durch ein Loch in ein Lochpanel durchstrahlen zu können, wobei eine solche Einschnürung einen Durchmesser kleiner als die Linse aufweisen kann.

Um eine ausreichende Eliminierung des Abbildungseffekts bei gleichzeitig immer noch enger Bündelung zu erreichen, kann die das Direktlicht einfangende, konvex gewölbte Lichteintrittsfläche relativ schlank und spitz zulaufend ausgebildet sein, beispielsweise zumindest näherungsweise einen Kegel bilden, der einen Kegelwinkel im Bereich von 2 x 15° bis 2 x 30° besitzt, beispielsweise 2 x 20° bis 2 x 25°. Die das Direktlicht einfangende Lichteintrittsfläche muss aber nicht exakt im mathematischen Sinne kegelig konturiert sein, sondern kann beispielsweise eine abgerundete Spitze besitzen oder nach Art eines Zuckerhuts im Längsschnitt betrachtet hyperbelartig geformt sein oder an der Spitze stärker gekrümmt und dann zu den Seitenflanken hin immer weniger stark gekrümmt sein bzw. eine näherungsweise - im Längsschnitt betrachtet - geradeaus laufende Kontur besitzen. Vorzugsweise ist die genannte Lichteintrittsfläche harmonisch gekrümmt bzw. harmonisch konturiert, ggf. mit Ausnahme der Spitze, die einen Sonderpunkt bilden kann, wie dies bei einer Kegelspitze der Fall ist.

Betrachtet man die Direktlicht-Eintrittsflächen als Ganzes, also den Teil der Linsenoberfläche auf der Eintrittsseite bzw. der der Lichtquelle zugewandten Seite, die von der Lichtquelle herkommendes Licht einfängt und direkt ohne interne Totalreflektion auf die Lichtaustrittsfläche wirft, kann die konvexe Zapfenform ein Verhältnis von Länge zu maximaler Breite bzw. Länge zu Maximaldurchmesser besitzen, das im Bereich von 2/3 bis 4/3 oder 3/4 bis 5/4 betragen kann. Die genannte Länge meint dabei die Erstreckung des zapfenförmigen Korpus, der von der Direktlicht-Eintrittsfläche umschlossen wird und tatsächlich Licht von der Lichtquelle einfängt, in der Hauptabstrahlrichtung der Linse und/oder parallel zu einer Symmetrieachse bzw. parallel zu einer Längsmittelachse der Linse. Die Breite bzw. der Maximaldurchmesser meint die maximale Erstreckung des von der Direktlicht-Eintrittsfläche definierten Korpus quer zu dessen Länge, also beispielsweise senkrecht zur Hauptabstrahlrichtung oder senkrecht zur Längsmittelachse der Linse. Die maximale Breite bzw. der maximale Durchmesser kann vorzugsweise an einem Abschnitt der Direktlicht-Eintrittsfläche liegen, der von der Lichtquelle maximal beabstandet ist bzw. am nächsten bei der Lichtaustrittsfläche liegt und sozusagen gerade noch Licht einfängt, das als nicht reflektiertes Direktlicht aus der Linse wieder abgestrahlt wird.

Die Direktlicht-Eintrittsfläche kann, in einem Längsschnitt betrachtet, in Richtung der Hauptabstrahlrichtung eine kontinuierlich zunehmende Breite bzw. einen kontinuierlich zunehmenden Durchmesser besitzen, so wie dies beispielsweise bei einem Kegel oder einem Zuckerhut der Fall ist.

Die Direktlicht-Austrittsfläche kann eine ähnliche Konturierung wie die Direktlicht-Eintrittsfläche besitzen, also insbesondere einen Kegel bilden, der einen Kegelwinkel im Bereich von beispielsweise 2 x 30° bis 2 x 55° oder 2 x 40° bis 2 x 50° besitzen kann. Die Direktlicht-Austrittsfläche muss aber ebenfalls nicht exakt im mathematischen Sinne kegelig konturiert sein, sondern kann beispielsweise zur Spitze hin abgerundet sein oder eine hyperbelartig abflachende Krümmung besitzen, wenn ein Längsschnitt betrachtet wird, und zwar in einer Richtung von der Lichtaustrittsfläche auf die Lichteintrittsfläche zu.

Ein Längen-/Durchmesserverhältnis der Direktlicht-Austrittsfläche bzw. des davon gebildeten konvexen Korpus kann ähnlich wie bei der Direktlicht-Eintrittsfläche im Bereich von 2/3 bis 4/3 oder 3/4 bis 5/4 liegen.

Um eine hohe lichttechnische Effizienz sowie eine saubere, enge Bündelung zu erreichen, kann in vorteilhafter Weiterbildung der Erfindung die Direktlicht-Eintrittsfläche und/oder die Direktlicht-Austrittsfläche glatt und hochtransparent ausgebildet sein, insbesondere ohne größere oder ganz ohne Facettierung und/oder ohne Mattierung ausgebildet sein. Gegebenenfalls kann eine leichte Facettierung an der Austrittsfläche und/oder ggf. auch an der Eintrittsfläche hilfreich sein, wobei solche leichten Facetten eine glatte Oberfläche definieren, die in ihrer Krümmung leicht von der Konturierung einer an die Austritts- und/oder Eintrittsfläche gelegten Hüllfläche abweicht. Beispielsweise kann eine leichte Facettierung eine leichte Schuppenstruktur mit beispielsweise leicht konvex gewölbten Schuppenschindeln aufweisen. Wie gesagt kann aber ggf. auch ganz ohne Facettierung und insbesondere auch ganz ohne Mattierung gearbeitet werden.

Vorzugsweise kann die in der genannten Weise konvex ausgebildete Direktlicht-Eintrittsfläche relativ zur Lichtquelle derart positioniert und derart konturiert sein, dass die genannte Direktlicht-Eintrittsfläche einen von der Lichtquelle herkommenden Lichtkegel mit einem Kegelwinkel von weniger als 2 x 40° oder weniger als 2 x 30° oder insbesondere weniger als 2 x 20° einfängt. Ein relativ kleiner Auffangwinkel der Direktlicht-Eintrittsfläche von beispielsweise 2 x 30° oder 2 x 20° kann eine ausreichende Überkreuzung der Lichtstrahlen im Inneren der Linse sicherstellen und gleichzeitig eine enge Bündelung des von der Lichtaustrittsfläche abgehenden Direktlichtstrahlenbündels ermöglichen, um unerwünschte Abbildungseffekte ausreichend zu eliminieren und gleichzeitig eine enge Bündelung zu gewährleisten.

Die breiter aufgeweiteten Lichtanteile, die von der kegel- bzw. zapfenförmig konturierten Direktlicht-Eintrittsfläche nicht mehr eingefangen werden, also seitlich rechts und links bzw. hinten und vorne daran vorbeigehenden Lichtstrahlen können von einem äußeren Teil der Linse eingefangen werden, um zu reflektiertem Indirektlicht verarbeitet zu werden oder ggf. auch abgeblendet werden, wenn die lichttechnische Effizienz nicht im Vordergrund steht.

Insbesondere können die genannten Direktlicht-Eintritts- und -austrittsflächen einen zentralen Teil bzw. zentralen Abschnitt der Linse bilden und von Indirektlicht-Eintritts- und -austrittsflächen umgeben sein, die einen ringförmigen äußeren Linsenteil bzw. Linsenabschnitt bilden und derart aufeinander abgestimmt sind, dass sie ein ebenfalls eng gebündeltes Indirektlichtstrahlenbündel mit einem kleinen oder auch gar keinem Aufweitwinkel abgeben. Ein solches enges Indirektlichtstrahlenbündel kann mit dem zuvor genannten Direktlichtstrahlenbündel überlagert sein, insbesondere zueinander koaxial im Zielgebiet zusammenfallen, wobei im Zielgebiet der Direktlichtanteil und der Indirektlichtanteil im Wesentlichen kongruent zueinander die bestrahlte Fläche jeweils vollständig bestrahlen können. Hierdurch kann eine homogene, gleichmäßige Durchmischung des Lichts im Zielgebiet erzielt werden. Gleichzeitig kann eine hohe lichttechnische Effizienz erreicht werden.

Die Lichteintrittsflächen, die das Direktlichtstrahlenbündel und das Indirektlichtstrahlenbündel formen bzw. hierbei helfen, können zusammen im Wesentlichen das gesamte von der Lichtquelle abgegebene Licht einfangen. Beispielsweise kann die Indirektlicht-Eintrittsfläche einen napfförmige Kranz bilden, der die Lichtquelle, beispielsweise eine LED oder ein LED-Cluster umgibt. Die Direktlicht-Eintrittsfläche kann im Inneren des von der napfförmige Indirektlicht-Eintrittsfläche umschlossenen Raums von dessen Boden zur Lichtquelle hinspringen, dabei vorzugsweise jedoch nicht über den Rand der Indirektlicht-Eintrittsfläche vorstehen bzw. leicht in das Innere zurückgesetzt sein, so dass die Lichtquelle weit genug im Innenraum der kranzförmigen Indirektlicht-Eintrittsfläche angeordnet werden kann.

Die Indirektlicht-Austrittsfläche kann eine ringförmige Konturierung besitzen, die eben oder nur schwach gewölbt sein kann, wenn ein Längsschnitt der Linse betrachtet wird. Am inneren Rand dieser ringförmigen Indirektlicht-Austrittsfläche kann die Linse einen Sprung bzw. eine napfförmige Vertiefung bzw. Ausnehmung besitzen, aus deren Zentrum heraus dann die Direktlicht-Austrittsfläche vorspringen kann. Zwischen Direktlicht-Autrittsfläche und Indirektlicht-Austrittsfläche kann eine ringförmige Sprungstelle bzw. Unstetigkeit vorgesehen sein, an der die Austrittsflächen nicht harmonisch gekrümmt ist bzw. benachbart anschließende, ggf. harmonische Krümmungen unterbrochen sind.

Alternativ zu einem solchen weiteren, äußeren ringförmigen Linsenteil kann die Linse aber auch nur aus dem beschriebenen Linsenkorpus zur Erzeugung des Direktlichtstrahlenbündels bestehen, also die beschriebene Direktlicht-Eintrittsfläche und Direktlicht-Austrittsfläche und einen dazwischenliegenden Linsenkorpus besitzen, der im Wesentlichen zylindrisch ausgebildet sein kann, und ggf. einen Teil einer Hybridoptik bilden, um ggf. den an der Direktlicht-Eintrittsfläche vorbeigehenden Lichtanteil, der von der Lichtquelle abgestrahlt wird, im Wege der Reflektion zu einem zusätzlichen Indirektlichtbündel zu formen.

Insbesondere kann ein solches Hybrid-Optikelement einen Reflektor aufweisen, der schalenförmig konturiert sein und/oder die genannte Linse umgeben kann. Der an der Direktlicht-Eintrittsfläche der Linse vorbeigehende Lichtanteil kann von dem genannten Reflektor eingefangen und reflektiert werden, insbesondere zu einem Indirektlichtbündel geformt werden, welches koaxial zum Direktlichtstrahlenbündel abgestrahlt werden kann und/oder im Zielgebiet das Direktlichtstrahlenbündel überlagern kann, insbesondere kongruent. Beispielsweise können das vom Reflektor geformte Indirektlichtbündel und das von der Linse geformte Direktlichtbündel koaxiale Hauptachsen besitzen und einen Fokuspunkt im Unendlichen aufweisen.

Die Erfindung wird nachfolgend anhand eines bevorzugten Ausführungsbeispiels und zugehörigen Zeichnungen näher erläutert. In den Zeichnungen zeigen:

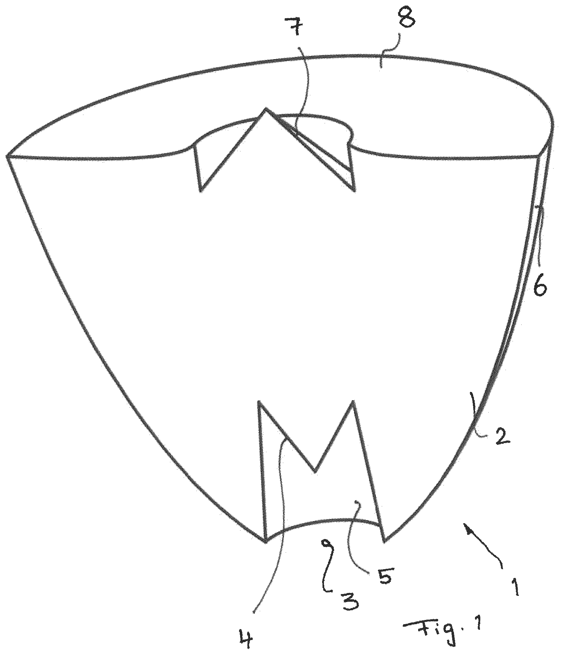

- Fig. 1:: eine perspektivische Darstellung einer Linse eines Strahlers nach einer vorteilhaften Ausführung der Erfindung in einem Halbschnitt, die die kegeligen bzw. stark konvex konturierten Direktlicht-Eintritts- und austrittsflächen im zentralen Abschnitt der Linse und den umgebenden, mit interner Totalreflektion arbeitenden ringförmigen Linsenteil zum Formen eines reflektierten Indirektlichtstrahlenbündels zeigt,

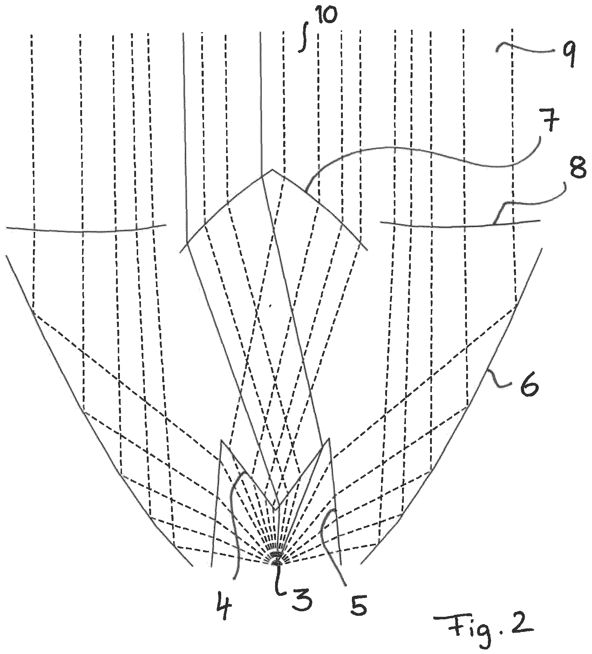

- Fig. 2:: eine Darstellung der Strahlengänge in der Linse aus Fig. 1, wobei im zentralen Linsenteil die sich überkreuzenden Strahlengänge des Direktlichtstrahlenbündels gezeigt sind und im äußeren ringförmigen Linsenteil die durch interne Totalreflektion erzeugten Strahlengänge für das Indirektlichtstrahlenbündel dargestellt sind,

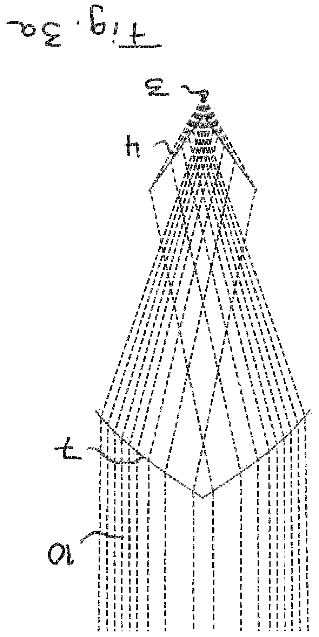

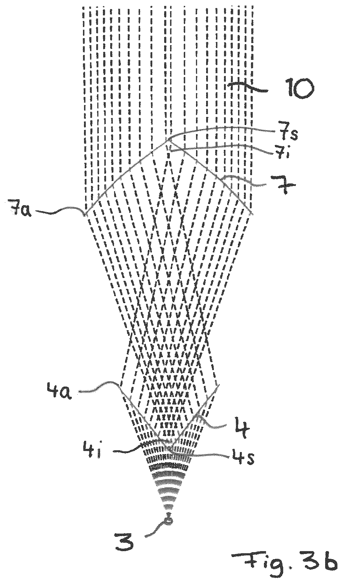

- Fig. 3:: eine Darstellung der Strahlengänge im zentralen Teil der Linse Fig. 1, die sich im Inneren der Linse überkreuzen und das unreflektierte Direktlichtstrahlenbündel bilden, wobei die Teilansicht a) eine Anordnung der Direktlicht-Eintrittsfläche mit einem Auffangwinkel von 2 x 30° und die Teilansicht b) eine Anordnung der Direktlicht-Eintrittsfläche mit einem Auffangwinkel von 2 x 20° zeigt,

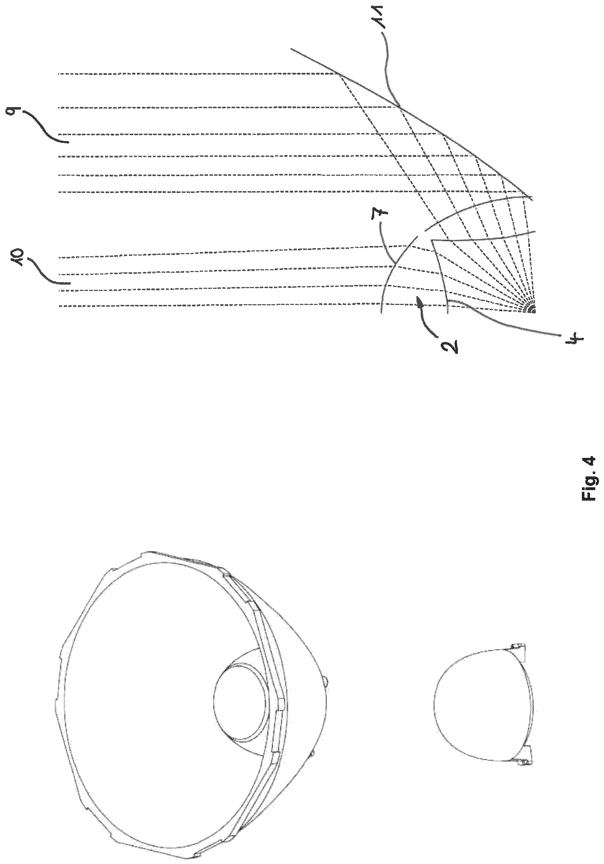

- Fig. 4:: eine Darstellung einer Hybridoptik umfassend eine Linse und einen die Linse umgebenden Reflektor nach einer weiteren Ausführung der Erfindung, wobei die Strahlengänge durch die Linse für das unreflektierte Direktlichtstrahlenbündel und die Strahlengänge, die am Reflektor reflektiert werden, für das reflektierte Indirektlichtstrahlenbündel dargestellt sind, und

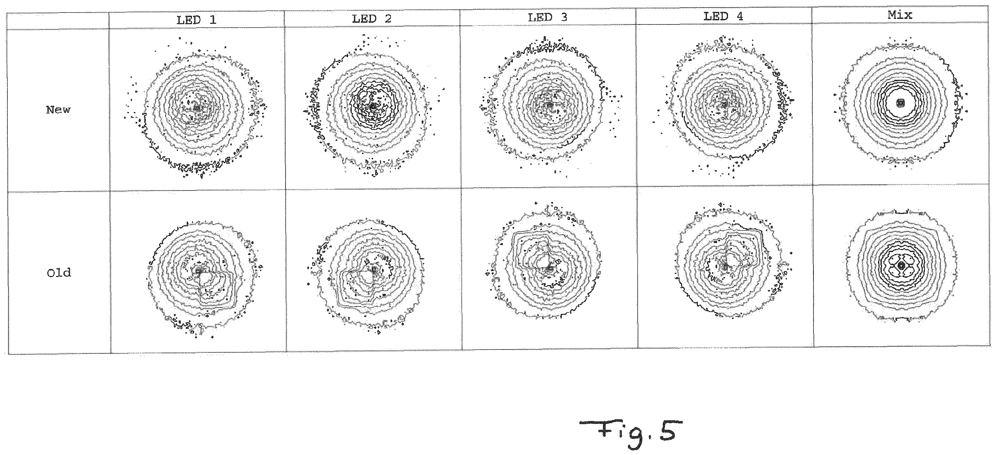

- Fig. 5:: eine vergleichende Darstellung der Farbmischungen bzw. Lichtverteilungen, die einerseits von einer herkömmlichen Kollimatorlinse mit unerwünschten Abbildungseffekten im Direktlichtstrahlenbündel und andererseits von einer Linse gemäß Fig. 1 erzielt werden.

Wie Figur 1 zeigt, umfasst der Strahler 1 eine Linse 2, die mit ihrer Lichteintrittsseite einer Lichtquelle 3 beispielsweise in Form einer LED oder eines LED-Clusters zugewandt ist und das von der Lichtquelle 3 abgegebene Licht direkt einfängt, vorzugsweise vollständig einfängt.

Die Linse 2 kann eine der Lichtquelle 3 zugewandte, napfförmige Lichteintrittsausnehmung aufweisen, die über die Lichtquelle 3 gestülpt sein kann. Ist die Lichtquelle 2 als Halbraumstrahler ausgebildet, fängt die genannte napfförmige Lichteintrittsausnehmung das gesamte Licht von der Lichtquelle 3 ein.

Die genannte Lichteintrittsausnehmung umfasst dabei zweierlei Lichteintrittsflächen. Zum einen ist eine Direktlicht-Eintrittsfläche 4 vorgesehen, die im zentralen Teil der napfförmigen Lichteintrittsausnehmung angeordnet sein und der Lichtquelle 3 frontal gegenüberliegen kann. Diese Direktlicht-Eintrittsfläche 4 ist nach Art eines Kegels oder eines Zuckerhuts konvex konturiert und kann koaxial zur Hauptachse der Lichtquelle 3 positioniert sein.

Zum anderen ist eine Indirektlicht-Eintrittsfläche 5 vorgesehen, die den napfförmigen Lichteintrittsraum umgibt und im Wesentlichen eine Umfangswandung der napfförmigen Ausnehmung bilden kann, vgl. Figur 1. Da die zuvor genannte Direktlicht-Eintrittsfläche 4 konvex vorspringend ausgebildet ist, umgibt die Indirektlicht-Eintrittsfläche 5 die genannte Direktlicht-Eintrittsfläche 4.

Das von der Direktlicht-Eintrittsfläche 4 eingefangene Licht tritt, ohne reflektiert zu werden, an der Direktlicht-Austrittsfläche 7 aus der Linse 2 wieder aus, wobei die genannte Direktlicht-Austrittsfläche 7 der Direktlicht-Eintrittsfläche 4 im Wesentlichen gegenüberliegen kann bzw. auf der gegenüberliegenden Seite der Linse 2 angeordnet und koaxial zur Direktlichteintrittsfläche positioniert sein kann.

Wie Figur 1 zeigt, ist auch die Direktlicht-Austrittsfläche 7 konvex konturiert, insbesondere kegelig ausgebildet oder ähnlich einem Zuckerhut oder einem Tannenzapfen vorspringend konturiert, wobei die genannte Direktlicht-Austrittsfläche 7 in Richtung des Lichtaustritts aus der Linse 2 vorspringt.

Die genannten Direktlicht-Eintritts- und Austrittsflächen 4 und 7 sowie der dazwischenliegende Teil des Linsenkorpus bilden einen zentralen Teil der Linse 2, welcher von einem ringförmigen äußeren Linsenabschnitt umgeben sein kann, der sozusagen für das reflektierte Indirektlicht zuständig ist bzw. mit totaler interner Reflexion arbeitet, um das Indirektlicht-Strahlenbündel zu formen.

Wie aus den Figuren 1 und 2 hervorgeht, wirft die Indirektlicht-Eintrittsfläche 5 das eingefangene Licht auf die Umfangsseite bzw. -fläche 6 der Linse 2, an der die Strahlengänge dann reflektiert und auf die ringförmige Indirektlicht-Austrittsfläche 8 geworfen werden.

Die Indirektlicht-Austrittsfläche 8 umgibt die Direktlicht-Austrittsfläche 7 ringförmig, wobei, wie Figur 1 zeigt, im Übergangsbereich zwischen der Indirektlicht-Austrittsfläche 8 und der Direktlicht-Austrittsfläche 7 ein Sprung vorgesehen bzw. ein Höhenversatz vorgesehen sein kann, wobei eine Umfangsfläche, die diesen Höhenversatz realisiert, im Wesentlichen zylindrisch und parallel zur Hauptachse der Linse 2 ausgebildet sein kann.

Wie Figur 2 zeigt, ist der Strahlengang des Indirektlichts, das heißt des Lichts, welches von der Indirektlicht-Eintrittsfläche 5 eingefangen, von der Umfangsfläche 6 total reflektiert und von der Indirektlicht-Austrittsfläche 8 abgestrahlt wird, an sich herkömmlich und ähnlich wie bei einer bekannten Kollimatorlinse. Das Indirektlicht-Strahlenbündel 9 kann eng gebündelt austreten und beispielsweise im Unendlichen fokussieren, wobei aber auch kleinere Aufweitwinkel von beispielsweise 2 x 5° oder weniger möglich sind.

Der Strahlengang des Direktlichts ist in der Linse 2 jedoch deutlich abweichend von bisher verwendeten Kollimatorlinsen. Durch die stark konvexe, schlanke und spitze Ausprägung der Direktlicht-Eintrittsfläche 4 werden die Strahlen beim Eintritt in die Linse 2 so stark abgelenkt, dass sie sich im Inneren der Linse 2 überkreuzen, bevor sie auf die Direktlicht-Austrittsfläche 7 gelangen, vgl. Figur 2. Betrachtet man Figur 2, werden die vom linken Teil der Direktlicht-Eintrittsfläche 4 eingefangenen Strahlen auf die rechte Seite der Direktlicht-Austrittsfläche 7 geworfen und umgekehrt die vom rechten Teil der Direktlicht-Eintrittsfläche 4 eingefangen Strahlen auf die linke Seite der Direktlicht-Austrittsfläche 7 geworfen.

Durch den überkreuzenden Strahlengang im Inneren der Linse 2 kann die abbildende Wirkung herkömmlicher Kollimatorlinsen vermieden werden und es ergibt sich auch eine homogene Farbverteilung im Zielgebiet, und zwar auch dann, wenn an der Lichtquelle 2 exzentrische Anordnungen einzelner farbiger LED-Elemente vorgenommen wird.

Durch die ebenfalls stark konvexe, spitz zulaufende bzw. schlanke und stark vorspringende Konturierung der Direktlicht-Austrittsfläche 7 wird der sich überkreuzende Strahlengang der Direktlichtstrahlen sozusagen wieder gerade gezogen, um auch das Direktlicht-Strahlenbündel 10 eng zu bündeln bzw. mit keinem oder nur einem kleinen Aufweitwinkel von beispielsweise weniger als 2 x 5° abzustrahlen.

Wie die Figuren 2, 3a und 3b verdeutlichen, bspw. Fig. 3b, besitzen die Direktlicht-Eintritts- und Austrittsflächen 4, 7 jeweils einen inneren, im Zentrum und/oder zum Zentrum benachbart angeordneten Flächenteil 4i bzw. 7i, vgl. Fig. 3b, sowie einen äußeren, vom Zentrum beabstandeten Flächenteil 4a und 7a aufweisen. Dabei ist die Direktlicht-Eintrittsfläche 4 dazu ausgebildet, mit ihrem genannten inneren Flächenteil 4i den äußeren Flächenteil 7a der Direktlicht-Austrittsfläche 7 zu bestrahlen und mit ihrem genannten äußeren Flächenteil 4a den inneren Flächenteil 7i der Direktlicht-Austrittsfläche 7 zu bestrahlen.

Wie Figur 1 zeigt, kann dabei die Direktlicht-Eintrittsfläche 4 eine Sprung- oder Unstetigkeitsstelle 4s besitzen, die vorzugsweise im Zentrum der Direktlicht-Eintrittsfläche 7 angeordnet ist, vgl. Fig. 3b. Alternativ oder zusätzlich kann die Direktlicht-Austrittsfläche 7 eine Sprung- oder Unstetigkeitsstelle 7s besitzen, die vorzugsweise im Zentrum der Direktlicht-Austrittsfläche 7 angeordnet ist, wobei an den genannten Sprung- oder Unstetigkeitsstelle 4s; 7s der Direktlicht-Eintritts- und Austrittsflächen 4; 7 eine harmonische Krümmung der Direktlicht-Eintritts- und Austrittsflächen 4; 7 unterbrochen sein bzw. die angrenzenden, harmonisch gekrümmten Flächenteile spitz zusammenlaufen könne, vgl. Fig. 1 sowie 3a, 3b.

Die Direktlicht-Eintritts- und Austrittsflächen 4; 7 sind insbesondere jeweils derart konvex konturiert, dass alle gemeinsam von einem Punkt der Lichtquelle 3 ausgehenden, insbesondere alle von der punktförmig ausgebildeten Lichtquelle 3 ausgehenden, Lichtstrahlen, die auf die Direktlicht-Eintrittsfläche 4 treffen und von der Direktlicht-Eintrittsfläche 4 auf die Direktlicht-Austrittsfläche 7 geworfenen werden, sich im Inneren der Linse 2 überkreuzen und dabei die zentrale Linsenlängsachse kreuzen, sowie von der Direktlicht-Austrittsfläche 7 wieder gebündelt als Direktlicht-Strahlenbündel 10 abgegeben werden, vgl. Fig. 3a und 3b.

Die Indirektlicht- und Direktlicht-Strahlenbündel 9 und 10 können koaxial zueinander abgestrahlt werden und sich im Zielgebiet im Wesentlichen vollständig überdecken bzw. kongruent zueinander sein.

Wie die Figuren 1 und 2 zeigen, kann die das Direktlicht einfangende, konvex gewölbte Direktlichteintrittsfläche 4 relativ schlank und spitz zulaufend ausgebildet sein, beispielsweise zumindest näherungsweise einen Kegel bilden, der einen Kegelwinkel im Bereich von 2 x 15° bis 2 x 30° besitzt, beispielsweise 2 x 20° bis 2 x 25°. Die das Direktlicht einfangende Lichteintrittsfläche 4 muss aber nicht exakt im mathematischen Sinne kegelig konturiert sein, sondern kann beispielsweise eine abgerundete Spitze besitzen oder nach Art eines Zuckerhuts im Längsschnitt betrachtet hyperbelartig geformt sein oder an der Spitze stärker gekrümmt und dann zu den Seitenflanken hin immer weniger stark gekrümmt sein bzw. eine näherungsweise - im Längsschnitt betrachtet - geradeaus laufende Kontur besitzen, wobei ein solcher Zuckerhut oder Tannenzapfen über den größeren Teil seiner Länge, beispielsweise 2/3 oder 3/4 seiner Länge oder mehr einen Kegelwinkel im vorgenannten Bereich von 2 x 15° bis 2 x 30° bzw. 2 x 20° bis 2 x 25° aufweisen kann, wenn an die leicht gekrümmte Umfangsfläche gelegte Tangenten betrachtet werden. Vorzugsweise ist die genannte Lichteintrittsfläche 4 harmonisch gekrümmt bzw. harmonisch konturiert, ggf. mit Ausnahme der Spitze, die einen Sonderpunkt bilden kann, wie dies bei einer Kegelspitze der Fall ist.

Betrachtet man die Direktlicht-Eintrittsfläche 4 als Ganzes, also den Teil der Linsenoberfläche auf der Eintrittsseite bzw. der der Lichtquelle 3 zugewandten Seite, die von der Lichtquelle 3 herkommendes Licht einfängt und direkt ohne interne Totalreflektion auf die Lichtaustrittsfläche 7 wirft, kann die konvexe Zapfenform ein Verhältnis von Länge zu maximaler Breite bzw. Länge zu Maximaldurchmesser besitzen, das im Bereich von 2/3 bis 4/3 oder 3/4 bis 5/4 betragen kann, vgl. Fig. 1, 2 und 3. Die genannte Länge meint dabei die Erstreckung des zapfenförmigen Korpus, der von der Direktlicht-Eintrittsfläche 4 umschlossen wird und tatsächlich Licht von der Lichtquelle 3 einfängt, in der Hauptabstrahlrichtung der Linse 2 und/oder parallel zu einer Symmetrieachse bzw. parallel zu einer Längsmittelachse der Linse 2.

Die Direktlicht-Eintrittsfläche 4 kann, in einem Längsschnitt betrachtet, in Richtung der Hauptabstrahlrichtung eine kontinuierlich zunehmende Breite bzw. einen kontinuierlich zunehmenden Durchmesser besitzen, so wie dies beispielsweise bei einem Kegel oder einem Zuckerhut der Fall ist, vgl. Fig. 1, 2 und 3.

Die Direktlicht-Austrittsfläche 7 kann eine ähnliche Konturierung wie die Direktlicht-Eintrittsfläche 4 besitzen, also insbesondere einen Kegel bilden, der einen Kegelwinkel im Bereich von beispielsweise 2 x 30° bis 2 x 55° oder 2 x 40° bis 2 x 50° besitzen kann. Die Direktlicht-Austrittsfläche 7 muss aber ebenfalls nicht exakt im mathematischen Sinne kegelig konturiert sein, sondern kann beispielsweise zur Spitze hin abgerundet sein oder eine hyperbelartig abflachende Krümmung besitzen, wenn ein Längsschnitt betrachtet wird, und zwar in einer Richtung von der Lichtaustrittsfläche auf die Lichteintrittsfläche zu.

Ein Längen-/Durchmesserverhältnis der Direktlicht-Austrittsfläche 7 bzw. des davon gebildeten konvexen Korpus kann ähnlich wie bei der Direktlicht-Eintrittsfläche 4 im Bereich von 2/3 bis 4/3 oder 3/4 bis 5/4 liegen.

Um eine hohe lichttechnische Effizienz sowie eine saubere, enge Bündelung zu erreichen, können die Direktlicht-Eintrittsfläche 4 und die Direktlicht-Austrittsfläche 7 glatt und hochtransparent ausgebildet sein, insbesondere ohne größere oder ganz ohne Facettierung und/oder ohne Mattierung ausgebildet sein.

Vorzugsweise kann die in der genannten Weise konvex ausgebildete Direktlicht-Eintrittsfläche 4 relativ zur Lichtquelle derart positioniert und derart konturiert sein, dass die genannte Direktlicht-Eintrittsfläche 4 einen von der Lichtquelle 2 herkommenden Lichtkegel mit einem Kegelwinkel von weniger als 2 x 40° oder weniger als 2 x 30° oder insbesondere weniger als 2 x 20° einfängt, vgl. Fig. 3a und 3b.

Ein relativ kleiner Auffangwinkel der Direktlicht-Eintrittsfläche 4 von beispielsweise 2 x 30° oder 2 x 20° kann eine ausreichende Überkreuzung der Lichtstrahlen im Inneren der Linse 2 sicherstellen und gleichzeitig eine enge Bündelung des von der Lichtaustrittsfläche 7 abgehenden Direktlichtstrahlenbündels 10 ermöglichen, um unerwünschte Abbildungseffekte ausreichend zu eliminieren und gleichzeitig eine enge Bündelung zu gewährleisten.

Der in Figur 5 dargestellte Vergleich der Lichtverteilungen im Zielgebiet zwischen einer herkömmlichen Kollimatorlinse und einer erfindungsgemäßen Linse, deren Direktlicht-Eintrittsfläche und Direktlicht-Austrittsfläche in der genannten Weise stark konvex konturiert sind, verdeutlicht die Beseitigung des abbildenden Effekts. Während bei einer herkömmlichen Kollimatorlinse ein exzentrischer Versatz der farbigen LED-Elemente zu sehen ist, vgl. die untere Darstellungsreihe der Figur 5, ist bei gleichem exzentrischen Versatz der farbigen LED-Elemente an der Lichtquelle kein solcher exzentrischer Versatz zu sehen, wenn die erfindungsgemäße Linse verwendet wird, vgl. die obere Reihe der Figur 5.

Wie Figur 4 verdeutlicht, kann der äußere ringförmige Bereich der Linse 2, der in der Ausführung nach Figur 1 dargestellt ist, auch durch einen Reflektor 11 ersetzt werden, der den zentralen Linsenteil mit den Direktlicht-Eintritts- und Austrittsflächen 4, 7 umgibt. Eine solche Hybridoptik arbeitet an sich analog wie für die Linse 2 gemäß Figur 1 beschrieben. Der zentrale Linsenteil 2 ist zuständig für das Direktlicht-Strahlenbündel 10, während das Indirektlicht-Strahlenbündel 9 unter Mitwirkung des Reflektors 11 geformt wird.

## Patentansprüche

1. Strahler mit einer Lichtquelle (3) sowie einer Linse (2) zum Formen eines Strahlenbündels (9, 10), wobei die Linse (2) aufeinander abgestimmte Direktlicht-Eintritts- und Austrittsflächen (4; 7) zum Einfangen von Licht aus der Lichtquelle und Abstrahlen eines unreflektierten Direktlichtbündels (10) aufweist, **dadurch gekennzeichnet, dass** die genannten Direktlicht-Eintritts- und Austrittsflächen (4; 7) jeweils derart konvex konturiert sind, dass die von der Direktlicht-Eintrittsfläche (4) auf die Direktlicht-Austrittsfläche (7) geworfenen Lichtstrahlen sich im Inneren der Linse (2) überkreuzen und von der Direktlicht-Austrittsfläche (7) wieder gebündelt als Direktlicht-Strahlenbündel (10) abgegeben werden.

2. Strahler nach dem vorhergehenden Anspruch, wobei die Direktlicht-Eintritts- und Austrittsflächen (4, 7) zusammen abbildungsbrechend arbeitend ausgebildet sind, so dass das von der Direktlicht-Austrittsfläche (7) abgestrahlte Direktlichstrahlenbündel (10) kein Abbild des an der Direktlicht-Eintrittsfläche (4) auftreffenden Lichtstrahlenbündels und/oder des von der Lichtquelle (3) abgestrahlten Lichtstrahlenbündel bildet.

3. Strahler nach einem der vorhergehenden Ansprüche, wobei die Direktlicht-Eintritts- und Austrittsflächen (4; 7) jeweils einen inneren, im Zentrum und/oder zum Zentrum benachbart angeordneten Flächenteil (4i; 7i) sowie einen äußeren, vom Zentrum beabstandeten Flächenteil (4a; 7a) aufweisen, wobei die Direktlicht-Eintrittsfläche (4) dazu ausgebildet ist, mit ihrem genannten inneren Flächenteil (4i) den äußeren Flächenteil (7a) der Direktlicht-Austrittsfläche (7) zu bestrahlen und mit ihrem genannten äußeren Flächenteil (4a) den inneren Flächenteil (7i) der Direktlicht-Austrittsfläche (7) zu bestrahlen.

4. Strahler nach einem der vorhergehenden Ansprüche, wobei die Direktlicht-Eintrittsfläche (4) eine Sprung- oder Unstetigkeitsstelle (4s) besitzt, die vorzugsweise im Zentrum der Direktlicht-Eintrittsfläche (7) angeordnet ist, und die Direktlicht-Austrittsfläche (7) eine Sprung- oder Unstetigkeitsstelle (7s) besitzt, die vorzugsweise im Zentrum der Direktlicht-Austrittsfläche (7) angeordnet ist, wobei an der genannten Sprung- oder Unstetigkeitsstelle (4s; 7s) der Direktlicht-Eintritts- und Austrittsflächen (4; 7) eine harmonische Krümmung der Direktlicht-Eintritts- und Austrittsflächen (4; 7) unterbrochen ist.

5. Strahler nach einem der vorhergehenden Ansprüche, wobei die Direktlicht-Eintritts- und Austrittsflächen (4; 7) jeweils derart konvex konturiert sind, dass alle gemeinsam von einem Punkt der Lichtquelle (3) ausgehenden, insbesondere alle von der punktförmig ausgebildeten Lichtquelle (3) ausgehenden, Lichtstrahlen, die auf die Direktlicht-Eintrittsfläche (4) treffen und von der Direktlicht-Eintrittsfläche (4) auf die Direktlicht-Austrittsfläche (7) geworfenen werden, sich im Inneren der Linse (2) überkreuzen und insbesondere auch eine zentrale Linsenlängsachse überkreuzen, und von der Direktlicht-Austrittsfläche (7) wieder gebündelt als Direktlicht-Strahlenbündel (10) abgegeben werden.

6. Strahler nach einem der vorhergehenden Ansprüche, wobei die Direktlicht-Eintrittsfläche (4) und/oder die Direktlicht-Austrittsfläche (7) kegelförmig konturiert ist und einen Kegelwinkel im Bereich von 2 x 15° bis 2 x 50° bilden, wobei vorzugsweise die Direktlicht-Eintritts- und Austrittsflächen (4; 7) voneinander unterschiedlich Kegelwinkel besitzen, insbesondere die Direktlicht-Eintrittsfläche (4) einen Kegelwinkel von 2 x 15° bis 2 x 30° oder 2 x 20° bis 2 x 25° aufweist und die Direktlicht-Austrittsfläche (7) einen Kegelwinkel von 2 x 30° bis 2 x 55° oder 2 x 40° bis 2 x 50° aufweist.

7. Strahler nach einem der Ansprüche 1 bis 5, wobei die Direktlicht-Eintrittsfläche (4) und/oder die Direktlicht-Austrittsfläche (7) zuckerhutförmig oder tannenzapfenförmig konvex konturiert ist.

8. Strahler nach einem der vorhergehenden Ansprüche, wobei die Direktlicht-Eintrittsfläche (4) und/oder die Direktlicht-Austrittsfläche (7) ein Längen-/Durchmesserverhältnis (L/D) von 2/3 bis 4/3 oder 3/4 bis 5/4 aufweist.

9. Strahler nach einem der vorhergehenden Ansprüche, wobei die Direktlicht-Eintrittsfläche (4) einen Auffangwinkel von 2 x 10° bis 2 x 40° oder 2 x 20° bis 2 x 30° besitzt, insbesondere derart konturiert und relativ zur Lichtquelle (3) derart angeordnet ist, dass die Direktlicht-Eintrittsfläche (4) einen Lichtkegel einfängt, der von der Lichtquelle (3) unter einem Kegelwinkel von 2 x 10° bis 2 x 40° oder 2 x 20° bis 2 x 30° auf die Linse (2), insbesondere koaxial zur Linse (2) abgestrahlt wird.

10. Strahler nach einem der vorhergehenden Ansprüche, wobei die Direktlicht-Austrittsfläche (7) und die Direktlicht-Eintrittsfläche (4) glatt und transparent ohne Facettierung und ohne Mattierung ausgebildet sind.

11. Strahler nach einem der vorhergehenden Ansprüche, wobei die Direktlicht-Eintrittsfläche (4) und die Direktlicht-Austrittsfläche (7) derart aufeinander abgestimmt sind, dass das von der Linse (2) abgestrahlte Direktlicht-Strahlenbündel (10) eine Fokussierung im Unendlichen aufweist oder einen Aufweitwinkel von < 2 x 5° besitzt.

12. Strahler nach einem der vorhergehenden Ansprüche, wobei die Direktlicht-Eintrittsfläche (4) und die Direktlicht-Austrittsfläche (7) einen zentralen Linsenteil bilden und von Indirektlicht-Eintritts- und Austrittsflächen (5; 8) umgeben sind, die einen ringförmigen äußeren Linsenteil bilden und derart aufeinander abgestimmt sind, dass von der Lichtquelle (3) her kommendes Licht eingefangen und zu einem reflektierten Indirektlicht-Strahlenbündel (9) geformt wird, wobei die Indirektlicht-Austrittsfläche (8) eine ringförmige Kontur besitzt und die Direktlicht-Austrittsfläche (7) umgibt.

13. Strahler nach dem vorhergehenden Anspruch, wobei das Direktlicht-Strahlenbündel (10) und das Indirektlicht-Strahlenbündel (9) zueinander koaxial und/oder in einem Zielgebiet einander überlagern und/oder deckungsgleich sind.

14. Strahler nach einem der beiden vorhergehenden Ansprüche, wobei die Indirektlicht-Eintrittsfläche (5) eine Umfangsfläche bildet, die eine napfförmige Lichteintrittsausnehmung begrenzt, von deren Boden die konvexe Direktlicht-Eintrittsfläche (5) zur Lichtquelle (3) hin vorspringt und von der Indirektlicht-Eintrittsfläche (5) umgeben wird.

15. Strahler nach einem der Ansprüche 1 bis 11, wobei die Direktlicht-Eintrittsfläche (4) und die Direktlicht-Austrittsfläche (7) einen zentralen Teil einer Hybridoptik bilden, die zusätzlich zur Linse (2) einen Reflektor (11) aufweist, der schalenförmig konturiert ist und die Linse (2) umgibt.
